# EUROPEAN PATENT APPLICATION

(11) **EP 4 727 076 A1**
(43) Date of publication of application: **15.04.2026**
(21) Application number: 23940982.4
(22) Date of filing: 12.06.2023
(51) Int. Cl.: H04L 41/052, H04L 67/60, G06F 9/44

(54) **COMMUNICATION SYSTEM AND COMMUNICATION APPARATUS BASED ON NETWORK CAPABILITY OPEN ARCHITECTURE**

(71) Applicant: Huawei Technologies Co., Ltd., Shenzhen, Guangdong 518129 (CN)
(72) Inventor: WU, Shaoyun, Shenzhen, Guangdong 518129 (CN); YAO, Qi, Shenzhen, Guangdong 518129 (CN); XING, Weijun, Shenzhen, Guangdong 518129 (CN)
(74) Representative: MERH-IP Matias Erny Reichl Hoffmann Patentanwälte PartG mbB
(86) International application number: PCT/CN2023/099747
(87) International publication number: WO 2024/254744

(57) **Abstract**

Embodiments of this application provide a communication system based on a network capability exposure architecture and a communication apparatus. The method includes: A terminal device, a network device, a cloud device, a campus device, or a private network device each may serve as an API provider to register a first API with an API repository function in a network; and an API orchestration function in the network may combine at least two first APIs provided by providers of a same type or different types to obtain a second API for invoking by an invoker. The method can implement a device-network-cloud collaboration function, support diversified services, and improve user experience.

## Description

### TECHNICAL FIELD

Embodiments of this application relate to the communication field, and more specifically, to a communication system based on a network capability exposure architecture and a communication apparatus.

### BACKGROUND

In an existing network capability exposure architecture, for example, a common application programming interface framework (common application programming interface framework, CAPIF) of a 5th generation (5th generation, 5G) network, an application function (application function, AF) can invoke different application programming interfaces (application programming interface, API) provided by different control plane network elements.

In this architecture, a network (for example, a control plane network element) usually provides a service API, and a third-party application (application, App) (for example, an AF) invokes the API. A network exposure capability is limited, and it is difficult to support diversified services proposed in communication.

### SUMMARY

Embodiments of this application provide a communication system based on a network capability exposure architecture and a communication apparatus. A device, a network, and a cloud may provide a service API, to support a device-network-cloud collaboration function and support diversified services.

According to a first aspect, a communication system based on a network capability exposure architecture is provided, including a service application programmable interface API repository function and an API orchestration function. The API repository function is configured to receive at least one first registration request from a first device set, the first registration request includes information of at least one first API provided by a first device, the first device is any device in the first device set, the first API is used to provide a basic service function, the first device set includes at least one of a terminal device, a network device, a cloud device, a campus device, or a private network device, and the at least one first registration request from the first device set includes information of at least two first APIs. The API orchestration function is configured to combine the at least two first APIs provided by the first device set to obtain a second API.

In this application, the first API may also be referred to as an elementary API, and is configured to provide a basic service function.

The basic service function is, for example, a UE location function, an SMS verification function, a voice verification function, or a data analysis function.

In this application, the first device is used as a provider of the first API, and the first device may include any one of the terminal device, the network device, the cloud device, the campus device, or the private network device.

In this application, the API orchestration function may combine first APIs provided by different types of providers, or may combine first APIs provided by a same type of provider. This is not limited in embodiments of this application.

According to this technical solution, the terminal device, the network device, the cloud device, the campus device, or the private network device each may serve as an API provider to register a first API with the API repository function in the network capability exposure architecture, the API orchestration function in the network capability exposure architecture may combine first APIs provided by a same type of provider or different types of providers to obtain the second API, so that the second API is invoked by an invoker. Therefore, the network capability exposure architecture can implement a device-network-cloud collaboration function, support diversified services, and improve user experience.

With reference to the first aspect, in a possible implementation, the system further includes an API exposure function, where the API exposure function is configured to receive a first invocation request, and the first invocation request is used to request to invoke the second API.

In this technical solution, the API exposure function is configured to receive the first invocation request of the invoker, to provide the second API for the invoker. The invoker may be a first device that has registered the first API with the API repository function, or may be a terminal device, a network device, a cloud device, a campus device, or a private network device that has not registered the first API.

With reference to the first aspect, in a possible implementation, the system further includes an API publishing function, and the API publishing function is configured to publish the second API.

In this technical solution, the API publishing function is configured to publish the second API obtained by the API orchestration function through combination, so that the invoker invokes the second API.

With reference to the first aspect, in a possible implementation, when the first device is one of the cloud device, the campus device, or the private network device, the API repository function receives the first registration request according to a hypertext transfer protocol (hyper text transfer protocol, HTTP); or when the first device is the terminal device, the API repository function receives the first registration request according to a control plane non-access stratum (non-access stratum, NAS) protocol or a user plane part of GPRS tunneling protocol (user plane part of GPRS tunneling protocol, GTP-U).

In this technical solution, it is shown that different types of providers register the first API in different manners. The foregoing is merely an example for description. This is not limited in embodiments of this application.

With reference to the first aspect, in a possible implementation, the first registration request includes a first condition, and the first condition is a condition for using the at least one first API.

In this technical solution, when sending the first registration request, the first device may further send a restriction condition for the invoker to invoke the registered first API. For example, for the first API provided by the terminal device, the first condition may be invocation time, an invoker (a specific authorized group user), a unit price, or the like. This solution helps the first device manage and maintain the first API, and further improves user experience.

With reference to the first aspect, in a possible implementation, the system further includes a requirement mapping function, and the requirement mapping function is configured to receive a first function requirement. The requirement mapping function is further configured to: determine a first API set based on the first function requirement, and send the first API set to the API orchestration function. The first API set includes the at least two first APIs provided by a second device set, and a device in the second device set belongs to the first device set. The API orchestration function is specifically configured to combine the at least two first APIs in the first API set to obtain the second API.

In this technical solution, the API orchestration function combines the first APIs based on the first function requirement of the invoker, to obtain the second API that meets a requirement of the invoker. In this solution, the second API is combined based on the function requirement of the user, so that the user requirement can be better matched, and user experience can be improved.

With reference to the first aspect, in a possible implementation, the API orchestration function is specifically configured to combine, according to an operation policy, the at least two first APIs included in the at least one first registration request from the first device set, to obtain the second API.

In this technical solution, the API orchestration function does not need to be triggered based on an actual service requirement, and the first APIs provided by the first device is combined according to the operation policy to obtain the second API. For example, it may be determined, based on a historical record, that the first APIs are combined to obtain the second API with a high invocation frequency. Alternatively, the API orchestration function may combine the first APIs based on a predefined requirement of the first API, to obtain the second API that meets more requirements. In this technical solution, the second API can be combined in an offline state, and does not need to be triggered based on an actual service requirement, so that signaling can be saved, invocation efficiency of the invoker can be improved, and user experience can be improved.

With reference to the first aspect, in a possible implementation, the system further includes an API scheduler function, and the API exposure function is further configured to: map the second API into the first API set, and send the first invocation request and the first API set to the API scheduler function. The API scheduler function is configured to determine a second API set based on the first API set, where the second API set includes the at least two first APIs provided by a third device set, a device in the third device set belongs to the first device set, and the second API set is the same as or different from the first API set.

In this technical solution, the API scheduler function may perform reselection or preferential selection on APIs in the API repository function based on functions of the APIs in the first API set, to form the second API set, so as to provide the invoker with selection of an optimal elementary API that meets a function requirement, thereby effectively improving user experience.

With reference to the first aspect, in a possible implementation, the API exposure function is further configured to perform security authentication.

In this technical solution, the API exposure function may perform security authentication on the invoker, thereby ensuring system security.

With reference to the first aspect, in a possible implementation, the system further includes an API monitoring function, and the API monitoring function is configured to update the first API in the API repository function based on a status of the at least one first API; and the API scheduler function is specifically configured to determine the second API set based on the at least one first API and the first API set.

In this technical solution, the API monitoring function may monitor the status of the first API in real time, and update the API repository, so that the API scheduler function reselects an appropriate second API set. This solution can reduce operation and maintenance costs of the network monitoring API, and improve user experience.

According to a second aspect, a communication method based on a network capability exposure architecture is provided. The method may be performed by a first device, or may be performed by a chip or a circuit configured in the first device. This is not limited in this application.

The network capability exposure architecture includes a service application programmable interface API repository function. The method is applied to the first device, and the first device includes any one of a terminal device, a network device, a cloud device, a campus device, or a private network device.

The first device is any one in a first device set, and the first device set includes at least one of the terminal device, the network device, the cloud device, the campus device, or the private network device.

The method includes: determining information of at least one first API, where the first API is used to provide a basic service function; and sending a first registration request to the API repository function, where the first registration request includes the information of the at least one first API.

For the first API and the first device in this application, refer to the first aspect. Details are not described again.

According to this technical solution, the terminal device, the network device, the cloud device, the campus device, or the private network device each may serve as an API provider to register a first API with the API repository function in the network capability exposure architecture. Therefore, the network capability exposure architecture can implement a device-network-cloud collaboration function, support a specific service, and improve user experience.

With reference to the second aspect, in a possible implementation, when the first device is a device in the cloud device, the campus device, or the private network device, the first device sends the first registration request according to an HTTP protocol; or when the first device is the terminal device, the first device sends the first registration request according to a control plane NAS protocol or a user plane GPT-U protocol.

With reference to the second aspect, in a possible implementation, the first registration request includes a first condition, and the first condition is a condition for using the at least one first API by the first device.

With reference to the second aspect, in a possible implementation, the network capability exposure architecture further includes a requirement mapping function, and the method further includes sending a first function requirement to the requirement mapping function. The requirement mapping function is configured to: determine a first API set based on the first function requirement, and send the first API set to an API orchestration function, so that the API orchestration function combines first APIs in the first API set to obtain a second API. The first API set includes at least two first APIs provided by a second device set, and a device in the second device set belongs to the first device set.

According to a third aspect, a communication method based on a network capability exposure architecture is provided. The method may be performed by a second device, or may be performed by a chip or a circuit configured in the second device. This is not limited in this application.

The network capability exposure architecture includes a service application programmable interface API exposure function and an API scheduler function, the method is applied to the second device, and the second device includes any one of a terminal device, a network device, a cloud device, a campus device, or a private network device.

The method includes: sending a first invocation request to the API exposure function, where the first invocation request is used to request to invoke a second API; and receiving a second API set from the API scheduler function, where the second API set is determined by the API scheduler function based on the second API.

For a first API in this application, refer to the first aspect. Details are not described again.

According to this technical solution, the terminal device, the network device, the cloud device, the campus device, or the private network device may serve as an invoker to send an invocation request to the API exposure function in the network capability exposure architecture, to request to invoke the published second API. Therefore, the network capability exposure architecture can implement invocation of a device, a network, and a cloud, thereby improving user experience.

With reference to the third aspect, in a possible implementation, the network capability exposure architecture further includes an API repository function, and the method further includes: determining information of at least one first API, where the first API is used to provide a basic service function; and sending a first registration request to the API repository function, where the first registration request includes the information of the at least one first API.

With reference to the third aspect, in a possible implementation, when the second device is one of the network device, the cloud device, the campus device, or the private network device, the first registration request is sent according to an HTTP protocol; or when the first device is the terminal device, the first registration request is sent according to a control plane NAS protocol or a user plane GPT-U protocol.

With reference to the third aspect, in a possible implementation, the first registration request includes a first condition, and the first condition is a condition for using the at least one first API.

With reference to the third aspect, in a possible implementation, the network capability exposure architecture further includes a requirement mapping function, and the method further includes sending a first function requirement to the requirement mapping function. The requirement mapping function is configured to: determine a first API set based on the first function requirement, and send the first API set to an API orchestration function, so that the API orchestration function combines first APIs in the first API set to obtain the second API. The first API set is a set of first APIs provided by a first device set, the first API set includes at least two first APIs provided by a second device set, and a device in the second device set belongs to the first device set.

According to a fourth aspect, a communication apparatus is provided. The apparatus may be a first device, or may be a chip or a circuit configured in the first device, or may be a logical module or software that can implement all or a part of the first device. This is not limited in this application.

The first device includes any one of a terminal device, a network device, a cloud device, a campus device, or a private network device.

The first device is any one in a first device set, and the first device set includes at least one of the terminal device, the network device, the cloud device, the campus device, or the private network device.

The apparatus includes: a processing unit, configured to determine information of at least one first API, where the first API is used to provide a basic service function; and a transceiver unit, configured to send a first registration request to an API repository function, where the first registration request includes the information of the at least one first API.

For the first API and the first device in this application, refer to the first aspect. Details are not described again.

According to this technical solution, the terminal device, the network device, the cloud device, the campus device, or the private network device each may serve as an API provider to register a first API with the API repository function in a common application programming interface framework. Therefore, the common application programming interface framework can implement a device-network-cloud collaboration function, support a specific service, and improve user experience.

With reference to the fourth aspect, in a possible implementation, the common application programming interface framework further includes an API exposure function, and the transceiver unit is further configured to send a first invocation request to the API exposure function, where the first invocation request is used to request to invoke a second API.

With reference to the fourth aspect, in a possible implementation, when the first device is a device in the cloud device, the campus device, or the private network device, the transceiver unit is further configured to send the first registration request according to an HTTP protocol; or when the first device is the terminal device, the transceiver unit is further configured to send the first registration request according to a control plane NAS protocol or a user plane GPT-U protocol.

With reference to the fourth aspect, in a possible implementation, the first registration request includes a first condition, and the first condition is a condition for using the at least one first API by the first device.

With reference to the fourth aspect, in a possible implementation, the network capability exposure architecture further includes a requirement mapping function. The transceiver unit is further configured to send a first function requirement to the requirement mapping function. The requirement mapping function is configured to determine a first API set based on the first function requirement, and send the first API set to an API orchestration function, so that the API orchestration function combines first APIs in the first API set to obtain the second API. The first API set includes at least two first APIs provided by a second device set, and a device in the second device set belongs to the first device set.

According to a fifth aspect, a communication apparatus is provided. The apparatus may be a second device, or may be a chip or a circuit configured in the second device, or may be a logical module or software that can implement all or a part of the second device. This is not limited in this application.

A network capability exposure architecture includes a service application programmable interface API exposure function and an API scheduler function, and the second device includes at least one of a terminal device, a network device, a cloud device, a campus device, or a private network device.

The apparatus includes: a transceiver unit, configured to send a first invocation request to the API exposure function, where the first invocation request is used to request to invoke a second API; and the transceiver unit is further configured to receive a second API set from the API scheduler function, where the second API set is determined by the API scheduler function based on the second API.

For the first API in this application, refer to the first aspect. Details are not described again.

According to this technical solution, the terminal device, the network device, the cloud device, the campus device, or the private network device may serve as an invoker to send an invocation request to the API exposure function in the common application programming interface framework, to request to invoke the published second API. Therefore, the common application programming interface framework can implement invocation of a device, a network, and a cloud, thereby improving user experience.

With reference to the fifth aspect, in a possible implementation, the network capability exposure architecture further includes an API repository function, and the apparatus further includes a processing unit, configured to determine information of at least one first API, where the first API is used to provide a basic service function. The transceiver unit is further configured to send a first registration request to the API repository function, where the first registration request includes the information of the at least one first API.

With reference to the fifth aspect, in a possible implementation, when the second device is one of the network device, the cloud device, the campus device, or the private network device, the transceiver unit is further configured to send the first registration request according to an HTTP protocol; or when the first device is the terminal device, the transceiver unit is further configured to send the first registration request according to a control plane NAS protocol or a user plane GPT-U protocol.

With reference to the fifth aspect, in a possible implementation, the first registration request includes a first condition, and the first condition is a condition for using the at least one first API.

With reference to the fifth aspect, in a possible implementation, the network capability exposure architecture further includes a requirement mapping function. The transceiver unit is further configured to send a first function requirement to the requirement mapping function, where the requirement mapping function is configured to: determine a first API set based on the first function requirement, and send the first API set to an API orchestration function, so that the API orchestration function combines first APIs in the first API set to obtain the second API. The first API set includes at least two first APIs provided by a second device set, and a device in the second device set belongs to a first device set.

With reference to the fifth aspect, in a possible implementation, the API orchestration function is configured to combine, according to an operation policy, at least two first APIs included in at least one first registration request from the first device set, to obtain the second API.

According to a sixth aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, this application provides a communication apparatus. The apparatus includes: a memory, configured to store a program; and at least one processor, configured to execute a computer program or instructions stored in the memory, to perform the method provided in any one of the foregoing aspects or the implementations of the foregoing aspects.

According to an eighth aspect, this application provides a computer-readable storage medium. The computer-readable storage medium stores program code to be executed by a device, and the program code includes the method provided in any one of the foregoing aspects or the implementations of the foregoing aspects.

According to a ninth aspect, this application provides a computer program product including instructions. When the computer program product runs on a computer, the computer is enabled to perform the method provided in any one of the foregoing aspects or the implementations of the foregoing aspects.

According to a tenth aspect, this application provides a chip. The chip includes a processor and a communication interface. The processor reads, through the communication interface, instructions stored in a memory, to perform the method provided in any one of the foregoing aspects or the implementations of the foregoing aspects.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

### BRIEF DESCRIPTION OF DRAWINGS

FIG. 1 is a diagram of a network architecture applicable to an embodiment of this application;
FIG. 2 is a diagram of a common application programming interface framework applicable to an embodiment of this application;
FIG. 3 is a diagram of a common application programming interface framework 300 applicable to an embodiment of this application;
FIG. 4 is a block diagram of a communication system 400 based on a common application programming interface framework 300 applicable to an embodiment of this application;
FIG. 5 is a block diagram of a communication method 500 based on a common application programming interface framework 300 applicable to an embodiment of this application;
FIG. 6 is a block diagram of a communication method 600 based on a common application programming interface framework 300 applicable to an embodiment of this application;
FIG. 7 is a diagram of a communication apparatus 700 according to an embodiment of this application; and
FIG. 8 is a diagram of a communication apparatus 800 according to an embodiment of this application.

### DESCRIPTION OF EMBODIMENTS

The following describes technical solutions of this application with reference to accompanying drawings.

Technical solutions provided in this application may be applied to various communication systems, for example, a 5G or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A communication system applicable to this application is first briefly described below.

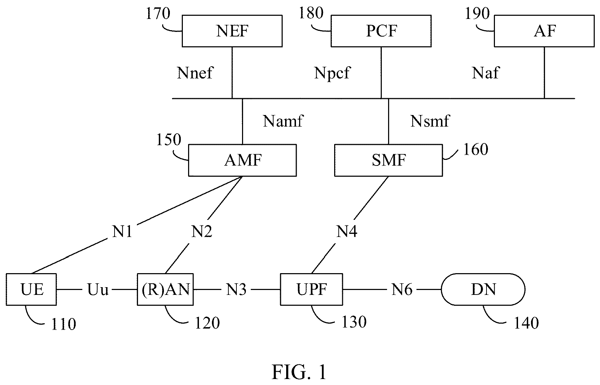

FIG. 1 is a diagram of a network architecture applicable to an embodiment of this application. As shown in FIG. 1, the network architecture may include user equipment 110, a (radio) access network device 120, a user plane network element 130, a data network 140, an access management network element 150, a session management network element 160, a network exposure network element 170, a policy control network element 180, an application network element 190, and the like. The following separately describes the network elements in the network architecture.
1. User equipment (user equipment, UE) 110: The user equipment may also be referred to as a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.
   The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.
2. (Radio) access network ((radio) access network, (R)AN) device 120: The access network device may also be referred to as an access device. The (R)AN can manage a radio resource, provide an access service for user equipment, and complete forwarding of data of the user equipment between the user equipment and a core network. The (R)AN may also be understood as a base station in a network.

For example, the access network device in embodiments of this application may be any communication device with a wireless transceiver function for communicating with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system like an NR system, or one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point. It may be understood that all or some functions of the access network device in this application may alternatively be implemented through a software function running on hardware, or may be implemented through a virtualization function instantiated on a platform (for example, a cloud platform).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

3. User plane network element 130: serves as an interface to a data network, and implements functions such as user plane data forwarding, session/flow-level charging statistics collection, and bandwidth throttling, that is, packet routing and forwarding, quality of service (quality of service, QoS) handling for user plane data, and the like.

In a long term evolution (long term evolution, LTE) communication system, the user plane network element may be a serving gateway user plane (serving gateway user plane, SGW-U), a packet data network gateway user plane (packet data network gateway user plane, PGW-U), or a network element in which an SGW-U and a PGW-U are integrated. In the 5G communication system, the user plane network element may be a user plane function (user plane function, UPF) network element.

4. Data network 140: provides, for example, an operator service, an internet access service, or a third-party service, and includes a server, where the server implements video source encoding, rendering, and the like.

In the 5G communication system, the data network may be a data network (data network, DN).

5. Access management network element 150: is mainly used for mobility management, access management, and the like, and may be configured to implement another function in mobility management entity (mobility management entity, MME) functions other than session management, for example, functions such as lawful interception and access authorization/authentication.

In an LTE communication system, the access management network element may be an MME network element. In the 5G communication system, the access management network element may be an access and mobility management function (access and mobility management function, AMF), and mainly performs functions such as mobility management and access authentication/authorization. In addition, the access management network element is further responsible for transferring a user policy between a terminal and a policy control function (policy control function, PCF) network element.

6. Session management network element 160: is mainly configured to: manage a session, allocate and manage an internet protocol (internet protocol, IP) address of user equipment, select an endpoint that can manage a user plane function interface and a policy control and charging function interface, perform downlink data notification, and the like.

In the LTE communication system, the session management network element may be a serving gateway control plane (serving gateway control plane, SGW-C), a packet data network gateway control plane (packet data network gateway control plane, PGW-C), or a network element in which an SGW-C and a PGW-C are integrated. In the 5G communication system, the session management network element may be a session management function (session management function, SMF) network element, and completes terminal IP address allocation, UPF selection, charging and QoS policy control, and the like.

7. Network exposure network element 170: In the LTE communication system, the network exposure network element may be a service capability exposure function (service capability exposure function, SCEF) network element. In the 5G communication system, the network exposure network element may be a network exposure function (network element function, NEF) network element, is mainly configured to expose a service and a capability of a 3GPP network function to an AF, and may further enable the AF to provide information for the 3GPP network function.

8. Policy control network element 180: includes a user subscription data management function, a policy control function, a charging policy control function, quality of service (quality of service, QoS) control, and the like, is a unified policy framework used to govern network behavior, and provides policy rule information and the like for a control plane function network element (for example, an AMF network element or an SMF network element).

In the LTE communication system, the policy control network element may be a policy control and charging function (policy control and charging function, PCRF). In the 5G communication system, the policy control network element may be a PCF.

In the 5G communication system, the application network element may be a network slice selection function (network slice selection function, NSSF) network element.

9. Application network element 190: In the 5G communication system, the application network element may be an application function (application function, AF) network element, represents an application function of a third party or an operator, is an interface for a 5G network to obtain external application data, and is mainly configured to transfer a requirement of an application side for a network side.

In a future communication system, for example, a 6G communication system, the foregoing network element or device may still use a name of the network element or device in a 4G or 5G communication system, or may have another name. This is not limited in embodiments of this application. The functions of the network elements or devices may be implemented by one independent network element, or may be jointly implemented by several network elements. During actual deployment, network elements in a core network may be deployed on a same physical device or different physical devices. For example, in a possible deployment, an AMF and an SMF may be deployed on a same physical device. For another example, a network element in a 5G core network and a network element in a 4G core network may be deployed on a same physical device. This is not limited in embodiments of this application.

It may be understood that FIG. 1 is merely an example, and does not constitute any limitation on the protection scope of this application. The communication method provided in embodiments of this application may further involve a network element that is not shown in FIG. 1. Certainly, the communication method provided in embodiments of this application may alternatively include only some network elements shown in FIG. 1.

In the network architecture shown in FIG. 1, the terminal is connected to the AMF through an N1 interface, the (R)AN is connected to the AMF through an N2 interface, and the (R)AN is connected to the UPF through an N3 interface. UPFs are connected to each other through an N9 interface, and the UPF is connected to the DN through an N6 interface. The SMF controls the UPF through an N4 interface.

It may be understood that the network architecture used in embodiments of this application is merely an example, and a network architecture to which embodiments of this application are applicable is not limited thereto. Any network architecture that can implement functions of the foregoing network elements is applicable to embodiments of this application.

Control plane network elements, such as the AMF, the SMF, the AUSF, and the PCF, may separately provide different service APIs, and expose the service APIs to the AF for invoking through the NEF (network exposure function).

The following describes a network capability exposure architecture provided in this application.

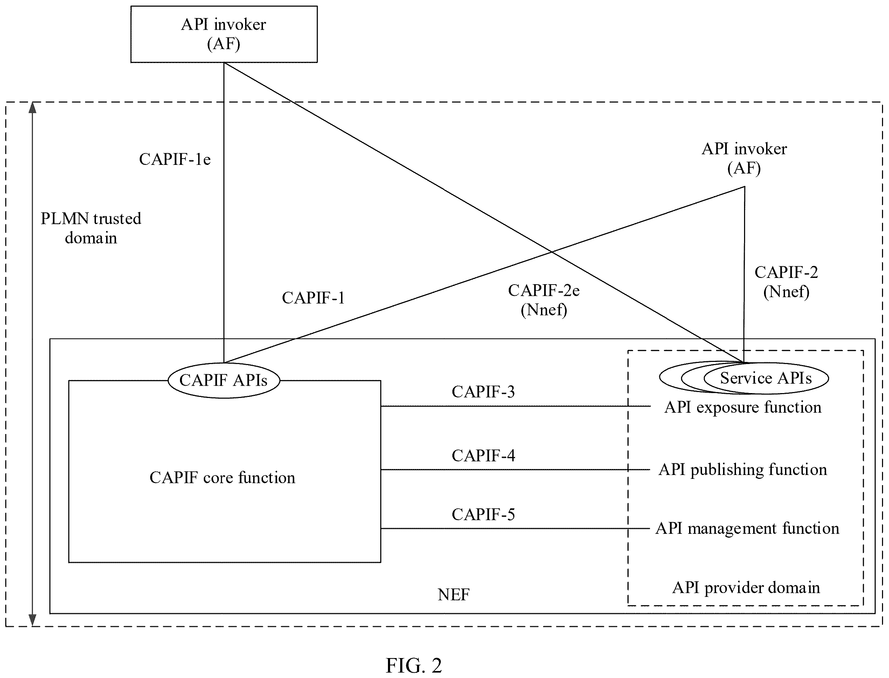

FIG. 2 is a diagram of a common application programming interface framework applicable to an embodiment of this application.

As shown in FIG. 2, the common application programming interface framework mainly includes an API invoker (API invoker), a common application programming interface framework core function (CAPIF core function), an API exposure function (API exposure function), an API publishing function (API publishing function), an API management function (API management function), and the like.

The API invoker is usually provided by a third-party application provider, for example, an OTT (over the top) vendor, that has a service agreement with a PLMN operator.

Main functions of the CAPIF core function include: (1) authenticating an identity of the API invoker; (2) controlling access to a service API according to a policy configured by the PLMN operator; (3) storing a log invoked by the service API; and (4) publishing and querying service API information.

The API exposure function is mainly used as a provider of the service API, and is also a service communication entry point between the service API and the API invoker. The main functions include: (1) authenticating the API invoker based on authentication information provided by the CAPIF core function; and (2) recording invoking of the service API in the CAPIF core function.

The API publishing function is mainly used by an API provider to publish the service API information, so that the API invoker can discover the service API and publish the service API information to the CAPIF core function.

The API management function is mainly configured to manage the service API, and main functions of the API management function include: (1) auditing a log that is invoked by the service API and that is received from the CAPIF core function; (2) monitoring a status of the service API; and (3) configuring a policy of the API provider in the CAPIF core function.

In the foregoing common application programming interface framework, an integrated network (for example, a control plane network element) is supported as a provider capability of a service API, an integrated terminal (for example, 2C) and an industry partner (for example, 2B/OTT) are not supported to provide a service API, and a device-network-cloud collaboration function proposed in future communication cannot be supported.

In addition, when a 3rd App invokes a network capability, functions of service APIs are scattered and diversified, and it is difficult for an invoker/a developer to accurately distinguish between service functions of the service APIs. In addition, each service API provides a basic service function. Therefore, it is difficult to support a specific service, for example, complex and diversified services in future network communication.

In conclusion, an existing common application programming interface framework cannot support service scenarios in which UE invokes a network capability, a network invokes a UE capability, and device-network-cloud collaboration processing.

In view of this, embodiments of this application provide a communication system based on a network capability exposure architecture and a communication apparatus. A device, a network, and a cloud may provide a service API, and implement orchestration and combination of different service APIs. In addition, the device, the network, and the cloud may alternatively be used as invokers to invoke the foregoing API. In this way, a complex service like device-network-cloud collaboration can be supported.

The following describes a network capability exposure architecture provided in this application.

The network capability exposure architecture is applicable to a 6G system (6th generation system, 6GS).

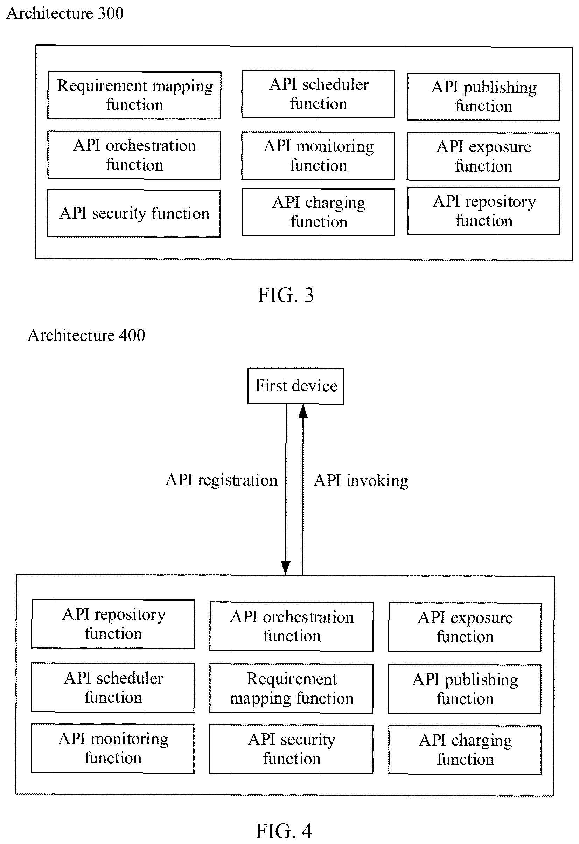

FIG. 3 is a block diagram of a common application programming interface framework 300 according to an embodiment of this application.

The common application programming interface framework defines a common device-network-cloud capability exposure platform. The capability exposure platform mainly includes a requirement mapping function (request mapping function), an API orchestration function (API orchestration function), an API monitoring function (API supervisor/monitoring function), an API scheduler function (API scheduler function), an API repository function (API repository function), an API publishing function (API publishing function), an API exposure function (API exposure function), an API security function (API security function), an API charging function (API charging function), and the like.

The capability exposure platform may be one or more network functional entities enhanced based on an NEF. For example, one of the foregoing functions corresponds to one network functional entity, or a plurality of functions correspond to one network functional entity. When a plurality of functions correspond to one network functional entity, each function in the network functional entity has an information exchange capability.

Names of the foregoing functional modules are merely examples. Names of the functional modules are not limited in this application. The following describes functions of the functional modules.

Requirement mapping function: A function requirement of an invoker is mapped to one or more elementary API requirements. The function requirement may include an indicator, a parameter, and the like.

In this application, an elementary (elementary) API may be an API that provides a basic service function. For example, the elementary API that may be provided by a network device includes a UE location, SMS verification, voice verification, data analysis, data compression, AI inference, and the like. Elementary APIs that can be provided by UE include a UE location, UE data sharing, data collection, computing services, and the like.

It should be noted that the basic service function is not limited to a unique service, and may alternatively be a combination of a plurality of service functions. For example, assuming that the AMF may provide three service functions, for example, access control, location obtaining, and communication, there may be three corresponding elementary APIs, which respectively correspond to the three service functions. Alternatively, there may be two corresponding elementary APIs. One elementary API corresponds to the access control service, and the other elementary API corresponds to a combination of the two services: location obtaining and communication. In other words, there is no strong correlation between the elementary API and complexity of functions corresponding to the elementary API.

API orchestration function: The API orchestration function orchestrates and combines a plurality of elementary APIs into an API that supports a specific function requirement. In other words, the API orchestration function may combine a plurality of elementary APIs that support basic service functions to obtain an API that can implement a specific function.

It should be noted that the API orchestration function orchestrates and combines a plurality of elementary APIs. The plurality of elementary APIs may be elementary APIs from a single provider/single device/single domain, or may be elementary APIs from different providers/different devices/different domains.

For example, some or all of the plurality of elementary APIs may be from UE, may be from a network device, or may be from a private network device or a campus device. This is not limited in embodiments of this application.

For example, the API orchestration function may combine a UE location, data analysis, and AI inference that are provided by the network device to obtain an API, to meet a service requirement of providing service acceleration for UE at a specific location.

For another example, the API orchestration function may combine data analysis and data compression services provided by the network device and UE data sharing and computing services provided by the UE, to meet a service requirement that a terminal assists the network in completing environment modeling.

In this application, the API orchestration function may combine a plurality of elementary APIs based on a service requirement, or may combine a plurality of elementary APIs according to an operation policy.

For example, elementary APIs are combined based on historical records or domain experience to meet corresponding functional requirements.

API monitoring function: The API monitoring function monitors a status of each elementary API, including availability, performance, and costs.

In this application, a manner in which the API monitoring function obtains the status of the elementary API may be that the API monitoring function sends a status query request to a provider/device of the elementary API, or the provider/device of each elementary API may report the status to the API monitoring function periodically or based on an event trigger mechanism. This is not limited in embodiments of this application.

API scheduler function: The API scheduler function schedules each elementary API provided by each provider/device in real time.

The API scheduler function may be further responsible for API preferential selection and reselection. The "preferential selection" means that when elementary APIs with a same function may be provided by different providers, an optimal provider is selected by considering factors such as performance and charging. The "reselection" means that a provider of an elementary API is reselected by considering problems such as a status change of the elementary API and a delay caused by UE mobility.

For example, for elementary APIs for providing a location function, the location function is initially provided by an AMF 1, and then is provided by an AMF 2 after a UE location changes.

For another example, for elementary APIs for providing a rendering function, the rendering function is initially provided by the cloud, and then is provided by the network after a UE location changes.

For another example, for elementary APIs for providing data analysis, data analysis is initially provided by a RAN, and then is provided by a core network element (for example, an NWDAF) after the RAN is congested.

API repository function: The API repository function may also be referred to as an API management function (API management function), and is responsible for API registration and maintenance.

API publishing function: The API publishing function publishes an elementary API or orchestrated and combined APIs for an invoker (UE, the network, APP, or a campus/private network) to invoke.

API exposure function: The API exposure function is configured to receive an API invocation request from an invoker.

The API exposure function may be further configured to perform security authentication on the invoker, and forward the API invocation request to the API scheduler function after the security authentication succeeds.

The API exposure function allows configuration of a remaining quota of each invoker. If there is a remaining quota, continued invoking is allowed and the invocation request is forwarded to the API scheduler function. Otherwise, a rejection response is sent to the invoker. A calculation mode of the remaining quota may include resource usage, use duration, a quantity of invocation times, and the like.

API security function: The API security function is configured to perform security authentication on an invoker. The API security function and the API exposure function may be deployed together or separately.

In this application, the invoker may be UE, a network, an APP, a campus device, a private network device, or the like. This is not limited in embodiments of this application.

In this application, the invoker may also be referred to as a user. This is not limited in embodiments of this application.

It should be noted that the foregoing functional modules may be independent modules, or may be randomly combined, or may be integrated into an existing functional module. This is not limited.

It should be noted that the foregoing functional modules are merely examples for description, and another functional module may be further included in an actual application. This is not limited in embodiments of this application.

The following describes a communication system provided in embodiments of this application.

FIG. 4 is a block diagram of a communication system 400 based on a common application programming interface framework 300 according to an embodiment of this application.

In this application, a first device set includes at least one of a terminal device, a network device (for example, a RAN, an AMF, or a UPF), a cloud device, a campus device, or a private network device. The cloud device may be a server or a gateway in a public cloud or a private cloud. The network device may be a core network device or an access network device, for example, a RAN, an AMF, or a UPF. The campus device may be a network device serving users gathered in limited geographical space. A campus also belongs to a private network, for example, a server or a gateway of a campus network or an enterprise network. The private network device may be understood as an internal network device, for example, a server or a gateway of a local area network.

In this application, a first API may be used as an example of an elementary API, and the first API is used to provide a basic service function.

The communication system includes an API repository function and an API orchestration function.

The API repository function is configured to receive at least one first registration request from the first device set.

The first registration request includes information of at least one first API provided by a first device.

The first device is any one in the first device set.

The at least one first registration request from the first device set includes information of at least two first APIs.

For example, the first device set includes two devices, the two devices each send one first registration request, and each registration request includes information of one first API.

For another example, the first device set includes one device, the device sends two first registration requests, and each registration request includes information of one first API.

For another example, the first device set includes two devices. One device sends one first registration request, and the other device sends two first registration requests. Each registration request includes information of one first API.

For another example, the first device set includes one device, the device sends one first registration request, and the first registration request includes information of two first APIs.

Correspondingly, the first device is configured to: determine the information of the at least one first API, and send the first registration request to the API repository function.

In this application, interaction between the API repository function and the first device may be performed in a manner of an existing protocol specification. This is not limited in embodiments of this application.

The first device may be any one of a terminal device, a network device, a cloud device, a campus device, or a private network device.

For example, when the first device is one of the cloud device, the campus device, or the private network device, the API repository function receives the first registration request according to a hypertext transfer protocol (hypertext transfer protocol, HTTP); or when the first device is the terminal device, the API repository function receives the first registration request according to a control plane non-access stratum (non-access stratum, NAS) protocol or a user plane part of GPRS tunneling protocol (user plane part of GPRS tunneling protocol, GTP-U).

Optionally, the first registration request further includes a first condition, and the first condition indicates a condition or a specification for using the first API.

For example, for a first API provided by the terminal device, the first condition may be use time, an invoker (a specific authorized group user), a unit price, or the like. For example, the terminal device may provide the first API service in a fixed time period. For another example, only a specific authorized user can use the first API. In this case, when requesting to invoke the first API, the invoker needs to determine, based on the condition, whether the condition is met.

For example, for a first API provided by the campus device or the private network device, the first condition may be a service range. To be specific, the first API can be used only when the invoker is within a specific service range. The first condition may alternatively be a unit price, and prices may be different when different devices provide APIs with a same function.

For example, for a first API provided by an APP/OTT, the first condition may be a unit price, a user level, or a user in a specific area.

For example, to enhance profitability, the OTT/APP may expose some first APIs for improving user experience to a user of a specific level or a user in a specific area.

The API orchestration function is configured to combine the at least two first APIs provided by the first device set to obtain a second API. The second API is an API that can support a specific service function.

It should be noted that the first API provided by the first device set may include first APIs provided by the terminal device, the network device, the cloud device, the campus device, or the private network device as different providers, or may include first APIs provided by different devices/entities as a single provider/domain, for example, a location service API provided by an AMF set including a plurality of AMFs. This is not limited in embodiments of this application.

It should be noted that the API orchestration function may combine at least two first APIs provided by a second device set to obtain a second API, and a device in the second device set belongs to the first device set. In other words, the API orchestration function selects, from the plurality of first APIs registered by the first device set, the first APIs registered by the second device set for combination. In other words, the first device set may include a plurality of devices. Different devices may provide first APIs with a same function, or may provide first APIs with different functions. The API orchestration function selects some or all of the plurality of first APIs for combination, and the some or all of the first APIs are provided by some devices (the second device set) in the plurality of devices.

For example, a device #1 registers an API #1 corresponding to a function #a and an API #2 corresponding to a function #c with the API repository function, a device #2 registers an API #3 corresponding to the function #a and an API #4 corresponding to a function #b with the API repository function, and a device #3 registers an API #5 corresponding to the function #b and an API #6 corresponding to the function #c with the API repository function. The device #1, the device #2, and the device #3 form the first device set. The API orchestration function needs to combine APIs with the function #a, the function #b, and the function #c. The API orchestration function may select the API #2 (with the function #c) registered by the device #1, the API #3 (with the function #a) registered by the device #2, and the API #4 (with the function #b) registered by the device #2 for combination, to obtain the second API. In this case, the device #1 and the device #2 form the second device set.

For another example, APIs with a function #a use a same API identifier on different devices. The function #a corresponds to an API #1, a function #b corresponds to an API #2, and a function #c corresponds to an API #3. A device #1 registers the API #1 corresponding to the function #a and the API #3 corresponding to the function #c, a device #2 registers the API #1 corresponding to the function #a and the API #2 corresponding to the function #b, and a device #3 registers the API #2 corresponding to the function #b and the API #3 corresponding to the function #c. The device #1, the device #2, and the device #3 form the first device set. If the API orchestration function needs to combine APIs with the function #a, the function #b, and the function #c, the API #1, the API #2, and the API #3 are selected for combination to obtain the second API. For example, the API orchestration function may select the API #1 registered by the device #1, the API #2 registered by the device #2, and the API #3 registered by the device #3. In this case, the device #1, the device #2, and the device #3 form the second device set. For another example, the API orchestration function may select the API #1 registered by the device #2, the API #2 registered by the device #2, and the API #3 registered by the device #3. In this case, the device #2 and the device #3 form the second device set.

The API orchestration function or an API scheduler function selects, based on factors such as availability, performance, and costs, an API provided by an appropriate provider/device.

In this application, the API orchestration function may combine, based on a function requirement, the first APIs provided by the first device set, or may combine, in an offline state, the first APIs provided by the first device set.

In a possible implementation, the system further includes a requirement mapping function.

The requirement mapping function is configured to: receive a first function requirement, determine the first API set based on the first function requirement, and send the first API set to the API orchestration function. The API orchestration function is specifically configured to combine all first APIs included in the first API set to obtain the second API.

The first API set includes at least two first APIs provided by the second device set.

The first function requirement may be a service requirement indicator, a requirement, or the like of the invoker. This is not limited in embodiments of this application.

The first API set includes a plurality of first APIs that match the first function requirement.

The invoker may be the first device, or may be another device, for example, any terminal device, any network device, any cloud device, any private network device, or any campus device. This is not limited in embodiments of this application.

For example, the first device sends the first function requirement to the requirement mapping function.

For example, the second device sends the first function requirement to the requirement mapping function, where the second device includes at least one of a terminal device, a network device, a cloud device, a campus device, or a private network device. The second device may send a registration request to the API repository function, or may not send a registration request to the API repository function. This is not limited in embodiments of this application.

For example, the API orchestration function may combine a plurality of elementary APIs according to an operation policy.

For example, in the offline state, the API orchestration function combines, based on a historical record or field experience and knowledge, the at least two first APIs provided by the first device set, to obtain the second API.

In an optional understanding, the API orchestration function does not need to be triggered based on an actual service requirement, and may determine, based on the historical record, to combine the first APIs to obtain the second API with a high invocation frequency. Alternatively, the API orchestration function may combine the first APIs based on the field experience and knowledge to obtain the second API that meets more requirements.

In a possible implementation, the communication system may further include an API exposure function.

The API exposure function is configured to receive a first invocation request, where the first invocation request is used to request to invoke the second API.

Correspondingly, the invoker may send the first invocation request to the API exposure function, to request to invoke the second API.

The invoker may be the first device, or may be the second device. This is not limited in embodiments of this application.

It should be understood that the second API is obtained by combining a plurality of first APIs. However, for the invoker, the second API exposed to the invoker through the API exposure function is an independent API.

Optionally, the API exposure function is further configured to perform security authentication.

When receiving the first invocation request, the API exposure function invokes a security function to perform security authentication on the invoker, and forwards the first invocation request to the API scheduler function after the security authentication succeeds.

In addition, the API exposure function allows configuration of a remaining quota of the invoker. If there is a remaining quota, continued invoking is allowed and the invocation request is forwarded to the API scheduler function. Otherwise, a rejection response is sent to the invoker.

A remaining quota calculation mode may include resource usage, use duration, a quantity of invocation times, and the like. This is not limited in embodiments of this application.

In a possible implementation, the communication system may further include the API scheduler function.

The API exposure function is further configured to: map the second API to the first API set, and send the first invocation request and the first API set to the API scheduler function. Correspondingly, after receiving the first invocation request and the first API set, the API scheduler function determines a second API set based on the first API set. The second API set includes at least two first APIs provided by a third device set, a device in the third device set belongs to the first device set, and the second API set is the same as or different from the first API set.

The API exposure function may map the second API that the invoker requests to invoke to the first API set. The first API set includes at least two first APIs provided by the second device set. The API scheduler function may determine the second API set based on the first API set.

In a possible implementation, the API scheduler function may re-determine, based on the plurality of first APIs in the first API set, at least two first APIs provided by the third device set to form the second API set, that is, the first API set is different from the second API set.

In a possible implementation, the API scheduler function determines the plurality of first APIs in the first API set to form the second API set, that is, the first API set is the same as the second API set.

It may be understood that the API scheduler function may be responsible for API preferential selection and reselection. To be specific, for the plurality of APIs in the first API set, factors such as performance and charging of the plurality of APIs are considered. A plurality of APIs that can implement functions of the plurality of APIs are reselected from the API repository function, a plurality of reselected APIs form the second API set, and the plurality of reselected APIs are APIs provided by devices in the third device set. It should be understood that the plurality of APIs in the first API set are provided by devices in the second device set, and devices in the second device set and the third device set all belong to the first device set.

It may be understood that, when the API scheduler function reselects, from the API repository function, the plurality of APIs that can implement the plurality of API functions, the API scheduler function still selects the plurality of APIs in the first API set, or the API scheduler function designates the plurality of APIs in the first API set as optimal APIs by default. In this case, the first API set is the same as the second API set.

For example, a device #1 registers an API #1 corresponding to a function #a and an API #2 corresponding to a function #c, a device #2 registers an API #3 corresponding to the function #a and an API #4 corresponding to a function #b, and the device #3 registers an API #5 corresponding to the function #b and an API #6 corresponding to the function #c. The API orchestration function needs to combine APIs with the function #a, the function #b, and the function #c. The API orchestration function may select the API #2 that is registered by the device #1 and that has the function #c, the API #3 that is registered by the device #2 and that has the function #a, and the API #5 that is registered by the device #3 and that has the function #b for combination, to obtain the second API. In this case, the first API set includes the API #2, the API #3, and the API #5, and a corresponding second device set includes the device #1, the device #2, and the device #3. The API scheduler function may re-determine, based on factors such as performance and charging, a plurality of first APIs to form the second API set, for example, determine to use the API #1 that is provided by the device #1 and that has the function #a, the API #5 that is provided by the device #3 and that has the function #b, and the API #6 that is provided by the device #3 and that has the function #c. That is, the second API set includes the API #1, the API #5, and the API #6, and a corresponding third device set includes the device #1 and the device #3.

For another example, a function #a corresponds to an API #1, a function #b corresponds to an API #2, and a function #c corresponds to an API #3. A device #l registers the API #1 corresponding to the function #a and the API #3 corresponding to the function #c, a device #2 registers the API #1 corresponding to the function #a and the API #2 corresponding to the function #b, and a device #3 registers the API #2 corresponding to the function #b and the API #3 corresponding to the function #c. If the API orchestration function needs to combine APIs with the function #a, the function #b, and the function #c, the second API set includes the API #1, the API #2, and the API #3. In this case, the second API set is the same as the first API set. The API scheduler function may select appropriate devices to respectively provide the API #1, the API #2, and the API #3. For example, a corresponding third device set includes the device #1 (providing the API #1 and the API #3) and the device #2 (providing the API #2), or includes the device #1 (providing the API #1), the device #2 (providing the API #2), and the device #3 (providing the API #3), and the like. It should be understood that, when two APIs with a same function are provided by different providers, the two APIs may be identified by different APIs, or may be identified by a same API. For example, in the foregoing example, the function #a may correspond to the API #1 of the device #1 and the API #3 of the device #2, or correspond to the API #1 of the device #1 and the API #1 of the device #2. This is not limited in embodiments of this application.

The API scheduler function may determine, in real time based on factors such as performance and charging of APIs provided by different providers, which first API is to be invoked, that is, which device executes an invocation request of the first API.

For example, the first API represents a rendering function, and can be provided by a RAN #1, a UPF #1, a UPF #2, and the cloud. At a moment #1, it is determined that the API scheduler function is provided by the RAN 1. At a moment #2, it is determined that the API scheduler function is provided by the UPF #1.

The API scheduler function sends the second API set to the invoker.

The invoker may be the first device, or may be the second device. This is not limited in embodiments of this application.

In a possible implementation, the communication system may further include an API monitoring function.

The API monitoring function is configured to update the first API in the API repository function based on a status of at least one first API.

A status of the first API provided by the first device set may change, and the status change may include a change of factors such as availability, performance, and costs.

The API monitoring function has a capability of monitoring the status change of the first API and updating the first API in the API repository function.

For example, the API monitoring function may send a request message to the first device, to query the status change.

For example, the first device may report the status change to the API monitoring function periodically or based on an event trigger mechanism.

The API monitoring function updates the first API in the API repository function based on a status change of each first API.

Optionally, the API scheduler function may be further configured to determine the second API set based on the status change of the first API.

For example, when availability of the API #3 that is registered by the device #2 and that has the function #a is updated to be unavailable, the API scheduler function may select the API #1 that is registered by the device #1 and that has the function #a.

For another example, the API #1 provided by the AMF #1 provides a location service. After a UE location changes, the API #3 provided by the AMF #2 may provide the location service.

In this solution, user experience can be improved, network operation and maintenance costs can be reduced, and use costs of a user can also be reduced.

In a possible implementation, the communication system may further include an API charging function.

The API charging function is configured to complete charging based on statistics about actual invocation information of the first API. In addition, the communication system may further include a charging policy, and the charging policy matches a use condition of the first API during registration. For example, a rule of which invokers are allowed to use the first API and a charging data record is generated, and which invokers are forbidden to invoke the first API is formulated.

It should be noted that, in this application, the terminal device, the network device, the cloud device, the campus device, or the private network device each may register and invoke a first API. In this case, there is a bidirectional charging mode. To be specific, any invoker needs to pay a provider of the first API. For example, when the terminal device invokes a first API provided by the network device, the terminal device needs to pay the network device. When invoking a first API provided by the terminal device, the network device also needs to pay the terminal device.

It should be noted that the foregoing functional modules may be independent modules, or may be randomly combined, or may be integrated into an existing functional module. This is not limited.

It should be noted that the foregoing functional modules are merely examples for description, and another functional module may be further included in an actual application. This is not limited in embodiments of this application.

According to this technical solution, the terminal device, the network device, the cloud device, the campus device, or the private network device each may serve as an API provider to register an elementary API with the API repository function in the network capability exposure architecture, and the API orchestration function in the network capability exposure architecture may combine elementary APIs provided by providers of a same type or different types to obtain the second API, so that the invoker invokes the second API through the API exposure function and the API scheduler function. Therefore, the network capability exposure architecture can implement a device-network-cloud collaboration function, support diversified services, and improve user experience.

The following describes a communication method based on a common application programming interface framework 300 provided in this application.

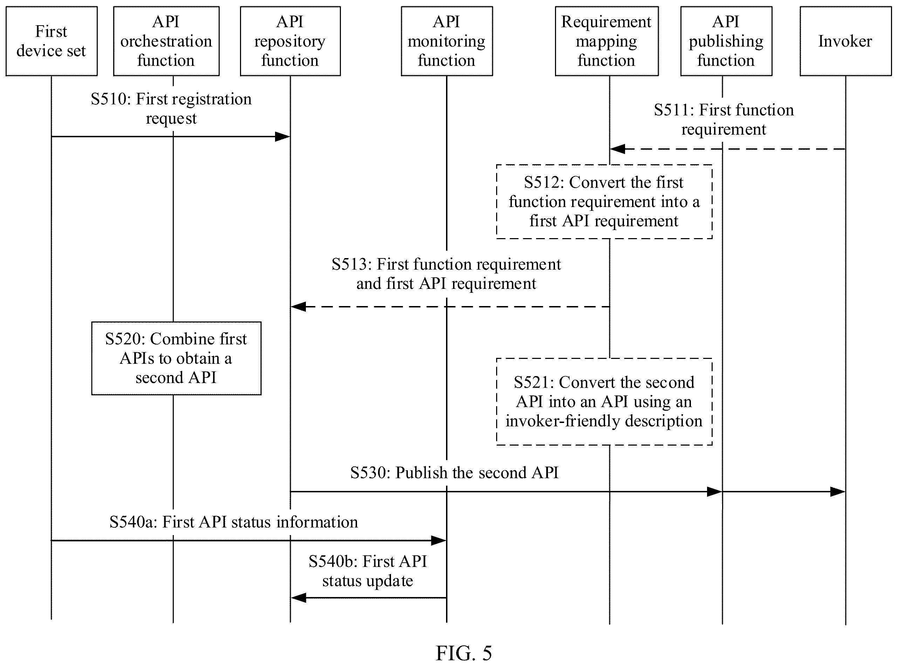

FIG. 5 is a block diagram of a communication method 500 based on the common application programming interface framework 300 according to an embodiment of this application.

The method 500 may include the following steps.

S510: A first device set sends a first registration request to an API repository function.

In this application, the first device set includes at least one of a terminal device, a network device, a cloud device, a campus device, or a private network device.

The first registration request includes information of at least one first API, and the first registration request is used to register the information of the at least one first API with the API repository function.

It should be noted that the first device set may include at least two devices, and the at least two devices (API providers) may separately send one or more first registration requests, to separately register one or more first APIs of each of the plurality of devices. The first device set may alternatively include one device. The device sends at least one first registration request to register at least two APIs of the device. This is not limited in embodiments of this application.

The first device set registers at least two first APIs.

In this application, the first API may be used as an example of an elementary API. A first device may register one or more elementary APIs with the API repository function, and each elementary API provides a basic service function.

In this application, the terminal device, the network device, the cloud device, the campus device, or the private network device may be used as an API provider to register a respective API with the API repository function. The terminal device may be a device like UE or a tablet. The network device may be a device like a RAN, a UPF, an AMF, or an NWDAF. The cloud device may be an edge application server (edge application server, EAS), an edge enabler server (edge enabler server, EES), or the like. The campus device or the private network device may be a device like a campus gateway.

S520: An API orchestration function combines the first APIs provided by the first device set to obtain a second API.

It should be understood that the API orchestration function may exchange information with the API repository function. Therefore, the API orchestration function may obtain, through the API repository function, the at least two first APIs registered by the first device set.

The API orchestration function combines the at least two first APIs to obtain one second API that can support a specific service function. The at least two first APIs registered by the first device set may be from different devices, or may be from a same device. This is not limited.

In a possible implementation, the API orchestration function may combine the first APIs online based on a function requirement of an invoker, including the following steps S511 to S513.

S511: The invoker sends a first function requirement to a requirement mapping function.

The first function requirement includes a service requirement indicator, a requirement, or the like of the invoker.

For example, the first function requirement may be completing data analysis, compression, and storage within a specific delay (for example, 1 second).

The invoker may be the first device, or may be a second device. The second device may be understood as a device that does not register an elementary API with the API repository function. This is not limited in embodiments of this application.

S512: The requirement mapping function converts the first function requirement into a first API requirement.

It may be understood that the requirement mapping function may select a plurality of corresponding first APIs based on a specific indicator or requirement.

For example, the first function requirement is mapped to three first APIs: a data analysis API, a data compression API, and a data storage API.

The first function requirement further includes a specific indicator or parameter. For example, a delay requirement is 1s.

S513: The requirement mapping function sends the first function requirement and the first API requirement to the API orchestration function.

For example, the analysis API, the data compression API, the data storage API, and the delay requirement are sent to the API orchestration function.

It should be understood that the foregoing steps S511 to S513 are optional steps.

S520: The API orchestration function combines the at least two first APIs to obtain the second API.

In a possible implementation, the API orchestration function may combine the at least two first APIs based on the first function requirement and the first API requirement to obtain the second API.

For example, when the delay is 1 second, the API orchestration function determines that the data analytics API, the data compression API, and the data storage API are provided by the RAN and the UPF. When the delay is 5 seconds, the API orchestration function determines that the data analytics API, the data compression API, and the data storage API are provided by the UPF and the cloud device.

In another possible implementation, the API orchestration function may combine the first APIs according to an operation policy in an offline state to obtain the second API.

For example, for video content, video compression and a QoS guarantee function may be combined and exposed through the second API for a user to invoke.

S521: The requirement mapping function converts the second API into an API using an invoker-friendly description.

It should be understood that the requirement mapping function may exchange information with the API orchestration function. Therefore, the requirement mapping function may obtain the second API from the API orchestration function.

Considering that API providers belong to different fields and APIs use different description languages, standardization processing needs to be performed, according to a specific policy, on a parameter included in the orchestrated second API.

For example, location-related parameters are uniformly converted into city/district or longitude and latitude, and parameters related to data storage and processing are uniformly encoded in a same manner.

For another example, different descriptions are provided for different invokers, to adapt to differentiated requirements.

The second API using a converted description is stored in the API repository function.

Step S521 is an optional step.

S530: The API repository function publishes the second API through an API publishing function.

The API repository function publishes, through the API publishing function, the second API using the converted description, for the invoker to invoke.

S540a: The first device sends first API status information to an API monitoring function.

The API monitoring function may monitor statuses of the first APIs provided by the first device set.

The first API status information includes availability, performance, costs, and the like of the first API.

For example, for a rendering function API, at a moment #1, UE #1 provides the rendering function API in only a region #1 and UE #2 provides the rendering function API in only a region #2 at a price of X CNY/minute; an NWDAF may provide the rendering function API in all domains at a price of Y CNY/minute; and a cloud device #1 may provide the rendering function API in the region #2 and a region #3 at a price of Z CNY/minute. However, at a moment #2, the UE #1 no longer provides the rendering function API, and the cloud device #1 may provide the rendering function API at a price of M CNY/minute.

In a possible implementation, the device in the first device set may send the first API status information to the API monitoring function periodically or based on event triggering.

In another possible implementation, the API monitoring function may send a first API status request to the device in the first device set, and the device in the first device set feeds back the first API status information to the API monitoring function.

S540b: The API monitoring function sends a first API status update message to the API repository function.

The API repository function updates a status of a first API in the API repository based on the first API status update message.

For example, if performance of a first API #1 changes, a performance parameter of the first API #1 is modified.

It should be understood that execution occasions of steps S540a and S540b are not limited in this embodiment of this application.

For example, steps S540a and S540b may be performed after S510. To be specific, after registering the one or more first APIs with the API repository function, the first device may monitor the one or more registered first APIs in real time and update the API repository function.

For another example, steps S540a and S540b may be performed after S550. To be specific, after sending a first invocation request to an API exposure function, the invoker may monitor the one or more registered first APIs in real time and update the API repository function.

According to this technical solution, the terminal device, the network device, the cloud device, the campus device, or the private network device may serve as the API provider to register a respective elementary API with the API repository function in a network capability exposure architecture. The API orchestration function may combine, based on a function requirement of the invoker, elementary APIs provided by providers of a same type or different types to obtain the second API, or may combine, in an offline state according to the operation policy, elementary APIs provided by providers of a same type or different types to obtain the second API. The second API is published through the API publishing function. In this solution, the second API obtained by combining the at least two elementary APIs can implement a device-network-cloud collaboration function, support diversified services, and is applicable to more complex scenarios or specific scenarios.

The foregoing steps are a process of orchestrating and publishing the second API. The following describes a process of invoking the second API.

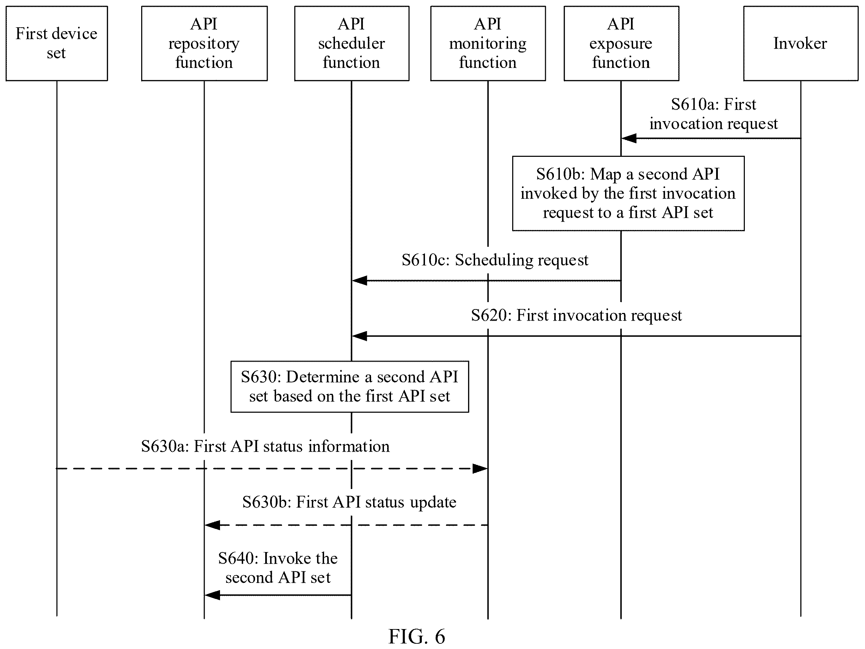

FIG. 6 is a block diagram of a communication method 600 based on a common application programming interface framework 300 according to an embodiment of this application.

The method 600 may include the following steps.

An invoker may request to invoke a second API through an API exposure function.

S610a: The invoker sends a first invocation request to the API exposure function.

The first invocation request includes the second API.

The first invocation request is used to request to invoke the second API published by an API publishing function.

It should be understood that any terminal device, any network device, any cloud device, any private network device, or any campus device may serve as an invoker to send the first invocation request to the API exposure function.

S610b: The API exposure function maps the second API invoked by the first invocation request to a first API set.

The second API requested to be invoked in the first invocation request is a combination of a plurality of elementary APIs, that is, the first API set.

The first API set includes a plurality of elementary APIs provided by a second device set.

Optionally, the API exposure function may further perform security authentication on the invoker.

It should be understood that different types of invokers may correspond to different security authentication manners, and the security authentication manners may include subscription, configuration, and the like.

For example, the terminal device may be authenticated based on subscription information, and an APP may be invoked based on configuration data. This is not limited in embodiments of this application.

In addition, different invokers may invoke the API in different manners or use different protocols.

For example, the APP uses a hypertext transfer protocol (hyper text transfer protocol, HTTP)/service based interface (service based interface, SBI), and the terminal device may use a control plane/user plane interface. This is not limited in embodiments of this application.

Optionally, the API exposure function may further perform remaining quota authentication on the invoker. A remaining quota calculation mode may include resource usage, use duration, a quantity of invocation times, and the like. This is not limited in embodiments of this application.

The API exposure function allows configuration of the remaining quota of the invoker. If there is a remaining quota, continued invoking is allowed. Otherwise, a rejection response is sent to the invoker.

S610c: The API exposure function sends a scheduling request to an API scheduler function.

The scheduling request is used to request the API scheduler function to schedule a first API included in the first API set.

The following step S620 is a process in which the invoker requests the API scheduler function to invoke the second API.

S620: The invoker sends the first invocation request to the API scheduler function.

The API scheduler function may determine, based on the first invocation request, the first API set that needs to be invoked.

In this manner, the API scheduler function may also map the second API requested to be invoked to the first API set.

The API scheduler function may further schedule an API security function to perform security authentication on the invoker.

S630: The API scheduler function determines a second API set based on the first API set.

In a possible implementation, the API scheduler function may determine to use a plurality of first APIs in the first API set as the second API set.

In another possible implementation, the API scheduler function may redetermine a plurality of first APIs based on functions of the plurality of first APIs in the first API set, to form the second API set. The second API set includes an elementary API provided by a third device set.

It should be understood that elementary APIs included in the second API set and the first API set have a same function, but some or all of the elementary APIs have different corresponding providers. To be specific, an API in the first API set is provided by a device in the second device set, and an API in the second API set is provided by a device in the third device set. Devices in the second device set are partially or completely different from devices in the third device set.

Optionally, the API scheduler function may perform preferential selection on the plurality of first APIs in the first API set, for example, select an optimal first API from the plurality of first APIs with a same function based on a factor like performance or charging. The optimal first API has a same function as the first API in the original first API set, but providers may be different.

Optionally, steps S630a and S630b are performed. For details, refer to S530a and S530b in the method 500. Details are not described again.

The API scheduler function may perform reselection on the plurality of first APIs based on an API that is monitored and updated by an API monitoring function in real time. For example, if the API monitoring function detects that availability of a first API of a data sharing function is updated to be unavailable, the API scheduler function reselects a first API that can provide the data sharing function.

S640: The API scheduler function invokes the second API set.

The API scheduler function invokes the plurality of first APIs in the second API set.

Optionally, the API scheduler function may further collect statistics on an API invoking message, and report the statistics to the API security function and an API charging function.

According to this technical solution, the terminal device, the network device, the cloud device, the campus device, or the private network device may be used as an invoker to request to invoke the second API published by the API publishing function, and the API scheduler function may perform preferential selection or reselection on the elementary APIs based on statuses of the elementary APIs that are updated by the API monitoring function in real time. In this way, the second API set is determined as an API set that can be invoked. In this solution, the terminal device, the network device, the cloud device, the campus device, or the private network device can invoke the API as an invoker based on a specific requirement, and further determine an optimal elementary API combination through the API scheduler function and the API monitoring function, thereby improving user experience.

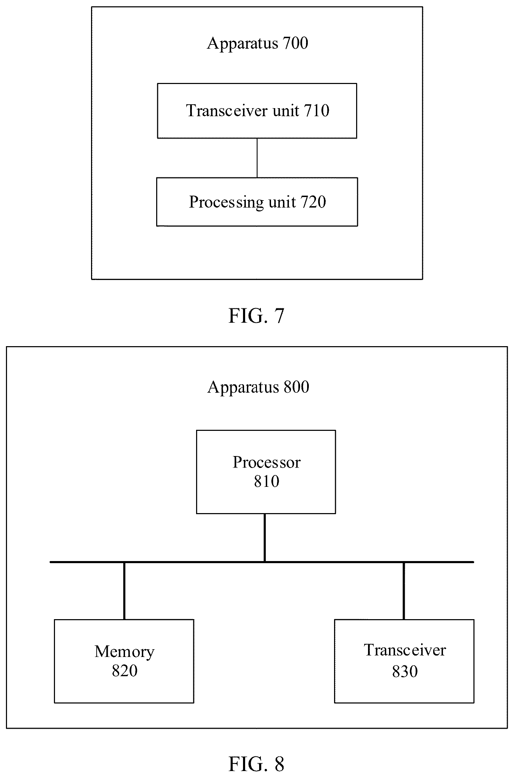

FIG. 7 is a diagram of a communication apparatus 700 according to an embodiment of this application.

The apparatus 700 includes a transceiver unit 710. The transceiver unit 710 may be configured to implement a corresponding communication function. The transceiver unit 7210 may also be referred to as a communication interface or a communication unit.

The apparatus 700 may further include a processing unit 720, and the processing unit 720 may be configured to perform data processing.

Optionally, the apparatus 700 may further include a storage unit, the storage unit may be configured to store instructions and/or data, and the processing unit 720 may read the instructions and/or the data in the storage unit, so that the apparatus implements actions of different devices in the foregoing method embodiments.

In a design, the apparatus 700 is configured to perform an action performed by the first device in the foregoing method embodiments.

Specifically, the processing unit 720 is configured to determine information of at least one first API, where the first API is used to provide a basic service function. The transceiver unit 710 is configured to send a first registration request to an API repository function, where the first registration request includes the information of the at least one first API.

In a design, the apparatus 700 is configured to perform an action performed by the second device in the foregoing method embodiments.

Specifically, the transceiver unit 710 is configured to send a first invocation request to an API exposure function, where the first invocation request is used to request to invoke a second API. The transceiver unit 710 is further configured to receive a second API set from an API scheduler function, where the second API set is determined by the API scheduler function based on the second API.

It should be understood that specific processes of performing the foregoing corresponding steps by the units are described in detail in the foregoing method embodiments. For brevity, details are not described herein again.

It should be further understood that the apparatus 700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 700 may be specifically the network device in the foregoing embodiments, and may be configured to perform procedures and/or steps corresponding to the network device in the foregoing method embodiments. To avoid repetition, details are not described herein again.

The apparatus 700 in the foregoing solutions has a function of implementing a corresponding step performed by the device in the foregoing methods, or the apparatus 700 in the foregoing solutions has a function of implementing a corresponding step performed by the network device in the foregoing methods. The function may be implemented by hardware, or may be implemented by executing corresponding software by hardware. The hardware or software includes one or more modules corresponding to the foregoing function. For example, the transceiver unit may be replaced with a transceiver machine (for example, the sending unit in the transceiver unit may be replaced with a transmitter machine, and the receiving unit in the transceiver unit may be replaced with a receiver machine), and another unit, for example, the processing unit, may be replaced with a processor, to separately perform sending and receiving operations and a related processing operation in the method embodiments.

In addition, the transceiver unit 710 may alternatively be a transceiver circuit (for example, may include a receiver circuit and a transmitter circuit), and the processing unit may be a processing circuit.

It should be noted that the apparatus in FIG. 700 may be the network element or the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 8 is a diagram of a communication apparatus 800 according to an embodiment of this application. The apparatus 800 includes a processor 810. The processor 810 is coupled to a memory 820. The memory 820 is configured to store a computer program or instructions and/or data. The processor 810 is configured to: execute the computer program or instructions stored in the memory 820, or read the data stored in the memory 820, to perform the methods in the foregoing method embodiments. As shown in FIG. 8, the apparatus 800 further includes a transceiver 830, and the transceiver 830 is configured to receive and/or send a signal. For example, the processor 810 is configured to control the transceiver 830 to receive and/or send a signal.

Optionally, there are one or more processors 810.

Optionally, there are one or more memories 820.

It should be understood that the processor 810 and the memory 820 may be integrated into one processing apparatus. The processor 810 is configured to execute program code stored in the memory 820 to implement the foregoing functions. During specific implementation, the memory 820 may alternatively be integrated into the processor 810, or may be independent of the processor 810. It should be understood that the processor 810 may alternatively correspond to each processing unit in the foregoing communication apparatus, and the transceiver 830 may correspond to each receiving unit and sending unit in the foregoing communication apparatus.

It should be further understood that the transceiver 830 may include a receiver (which is also referred to as a receiver machine) and a transmitter (which is also referred to as a transmitter machine). The transceiver may further include an antenna, and there may be one or more antennas. The transceiver may alternatively be a communication interface or an interface circuit.

Specifically, the communication apparatus 800 may correspond to the terminal device in the method 500 to the method 600 according to embodiments of this application. The communication apparatus 800 may include units of the methods performed by the invoker (the first device or the second device) in the methods 500 and 600. It should be understood that specific processes of performing the foregoing corresponding steps by the units are described in detail in the foregoing method embodiments. For brevity, details are not described herein.

When the communication apparatus 800 is a chip, the chip includes an interface unit and a processing unit. The interface unit may be an input/output circuit or a communication interface. The processing unit may be a processor, a microprocessor, or an integrated circuit integrated on the chip.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the storage mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the storage (storage module) may be integrated into the processor.

It should further be noted that the storage described herein is intended to include, but is not limited to, these and any other appropriate type of storage.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

This application further provides a system, including the foregoing first device, second device, and network capability exposure architecture.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

In embodiments of this application, the terms such as "example" or "for example" are used for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

It should be noted that, in embodiments of this application, "preset", "preconfigure", or the like may be implemented by pre-storing, in a device (for example, a terminal device), corresponding code, a table, or another manner that can indicate related information. A specific implementation thereof is not limited in this application, for example, a preset rule or a preset constant in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based on only A. B may alternatively be determined based on A and/or other information. Terms "include", "contain", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication system based on a network capability exposure architecture, comprising an application programming interface API repository function and an API orchestration function, wherein
the API repository function is configured to receive at least one first registration request from a first device set, wherein the first registration request comprises information of at least one first API provided by a first device, the first device is any device in the first device set, the first API is used to provide a basic service function, the first device set comprises at least one of a terminal device, a network device, a cloud device, a campus device, or a private network device, and the at least one first registration request from the first device set comprises information of at least two first APIs; and
the API orchestration function is configured to combine the at least two first APIs to obtain a second API.

2. The system according to claim 1, wherein the system further comprises an API exposure function, the API exposure function is configured to receive a first invocation request, and the first invocation request is used to request to invoke the second API.

3. The system according to claim 1 or 2, wherein the system further comprises an API publishing function, and the API publishing function is configured to publish the second API.

4. The system according to any one of claims 1 to 3, wherein when the first device is one of the cloud device, the campus device, or the private network device, the API repository function receives the first registration request according to a hypertext transfer protocol HTTP; or when the first device is the terminal device, the API repository function receives the first registration request according to a control plane non-access stratum NAS protocol or a user plane part of GPRS tunneling protocol GTP-U.

5. The system according to any one of claims 1 to 4, wherein the first registration request comprises a first condition, and the first condition is a condition for using the at least one first API.

6. The system according to any one of claims 1 to 5, wherein the system further comprises a requirement mapping function, and the requirement mapping function is configured to receive a first function requirement;
the requirement mapping function is further configured to: determine a first API set based on the first function requirement, and send the first API set to the API orchestration function, wherein the first API set comprises the at least two first APIs provided by a second device set, and a device in the second device set belongs to the first device set; and
the API orchestration function is configured to combine the at least two first APIs in the first API set to obtain the second API.

7. The system according to any one of claims 1 to 5, wherein the API orchestration function is configured to combine, according to an operation policy, the at least two first APIs comprised in the at least one first registration request from the first device set, to obtain the second API.

8. The system according to any one of claims 1 to 7, wherein the system further comprises an API scheduler function;
the API exposure function is further configured to: map the second API to the first API set, and send the first invocation request and the first API set to the API scheduler function; and
the API scheduler function is configured to determine a second API set based on the first API set, wherein the second API set comprises the at least two first APIs provided by a third device set, a device in the third device set belongs to the first device set, and the second API set is the same as or different from the first API set.

9. The system according to claim 8, wherein
the API exposure function is further configured to perform security authentication.

10. The system according to claim 8 or 9, further comprising an API monitoring function, wherein
the API monitoring function is configured to update the first API in the API repository function based on a status of the at least one first API; and
the API scheduler function is configured to determine the second API set based on the status of the at least one first API and the first API set.

11. A communication apparatus, wherein the communication apparatus is configured to perform the method performed in the communication system according to any one of claims 1 to 10.

12. A communication apparatus, comprising:
a processor, configured to execute a computer program stored in a memory, so that the apparatus performs the method performed in the communication system according to any one of claims 1 to 10.

13. The apparatus according to claim 12, wherein the apparatus further comprises the memory.

14. A computer-readable storage medium, wherein the computer-readable storage medium stores a computer program, and when the computer program is run on a computer, the computer is enabled to perform the method performed in the communication system according to any one of claims 1 to 10.

15. A computer program product, wherein the computer program product comprises instructions used to perform the method performed in the communication system according to any one of claims 1 to 10.

16. A chip system, comprising: a processor, configured to invoke a computer program from a memory and run the computer program, so that a communication device on which the chip system is installed performs the method performed in the communication system according to any one of claims 1 to 10.
